# EUROPÄISCHE PATENTSCHRIFT

(11) **EP 4 188 630 B1**
(45) Veröffentlichungstag und Bekanntmachung des Hinweises auf die Patenterteilung: **04.09.2024**
(21) Anmeldenummer: 21752672.2
(22) Anmeldetag: 30.07.2021
(51) Int. Cl.: B23K 9/067, B23K 9/073, B23K 9/09, B23K 9/167

(54) **VERFAHREN UND VORRICHTUNG ZUM SCHWEISSEN VON WERKSTÜCKEN MIT ÜBERLAGERTEN HOCHFREQUENZPULSEN**
METHOD AND DEVICE FOR WELDING WORKPIECES INCLUDING SUPERIMPOSED HIGH FREQUENCY PULSES
METHODE ET DISPOSITIF DE SOUDAGE DE PIECES AVEC DES PULSATIONS HAUTE FREQUENCE SUPERPOSEES

(30) Priorität: 31.07.2020 DE 102020209717
(43) Veröffentlichungstag der Anmeldung: 07.06.2023
(73) Patentinhaber: FRONIUS INTERNATIONAL GmbH, 4643 Pettenbach (AT)
(72) Erfinder: LATTNER, Peter, 4643 Pettenbach (AT); WILLINGER, Martin, 4643 Pettenbach (AT)
(74) Vertreter: Bratovic, Nino Maria
(86) Internationale Anmeldenummer: PCT/EP2021/071397
(87) Internationale Veröffentlichungsnummer: WO 2022/023526

(56) Entgegenhaltungen:
- DE-A1- 2 313 677
- DE-A1- 2 904 481
- DE-T2- 60 311 994
- DE-U1- 202006 021 306
- JP-A- H06 320 272

## Beschreibung

Die Erfindung betrifft ein Verfahren und eine Vorrichtung zum Schweißen von Werkstücken durch einen Schweißlichtbogen mittels einer Schweißelektrode, insbesondere mit einer nicht abschmelzenden Wolframschweißelektrode.

Beim Lichtbogenschweißen brennt ein elektrischer Lichtbogen bzw. Schweißlichtbogen SLB zwischen einem Werkstück und einer Schweißelektrode. Beim Wolfram-Inertgas-Schweißen WIG (engl. Tungsten Inert Gas TIG) wird eine Schweißelektrode aus Wolfram verwendet. Im Gegensatz zu anderen herkömmlichen Lichtbogenschweißverfahren schmilzt beim WIG-Schweißverfahren die verwendete Schweißelektrode aufgrund des hohen Schmelzpunktes von Wolfram nicht ab. Der notwendige Zusatzwerkstoff wird in Form von Drähten oder Stäben in den Schweißlichtbogen gehalten und auf diese Weise abgeschmolzen. Damit die Schmelze nicht mit der Umgebungsluft reagiert, werden vorzugsweise Schutzgase verwendet, die inert sind, also keine chemische Reaktion mit den beteiligten Werkstoffen eingehen. Beim WIG-Schweißen entstehen nur wenige Schweißspritzer. Da die verwendete Schweißelektrode nicht abschmelzend ist, ist zudem die Zugabe des Schweißzusatzes bzw. Zusatzwerkstoffes und die Stromstärke des Schweißstromes voneinander entkoppelt. Dies bietet den Vorteil, dass der Schweißstrom für den Schweißprozess relativ einfach abstimmbar ist und tatsächlich nur eine notwendige Menge an Zusatzwerkstoff zugeführt wird.

Da die nicht abschmelzbare Schweißelektrode beim Intervallschweißen während einer Pausenzeit abkühlt, kann es allerdings unter Umständen zu Zündproblemen beim Zünden des Schweißlichtbogens kommen. Nach dem Zünden des Schweißlichtbogens wird die nicht abschmelzende Schweißelektrode von einer Stromquelle der Schweißvorrichtung mit Energie versorgt. Dabei ist es wichtig, dass der Energieeintrag in das Werkstück während des Schweißprozesses in einem geeigneten Bereich liegt, um einerseits genügend Energie bereitzustellen, um ein Schmelzbad zu erzeugen, und andererseits einen zu hohen Energieeintrag zu verhindern.

DE 20 2006 021 306 U1 beschreibt einen Gas-Wolfram-Lichtbogenschweißprozess und einen Wolfram-Inertgas-Schweißprozess, wobei ein Schweißstrom in einer Wellenform geregelt wird, wobei die Wellenform ein Profil aufweist, das zwischen einer ersten Stromsektion und einer zweiten Stromsektion mit einer bestimmten Gesamtfrequenz wechselt, wobei jede dieser Sektionen einen Spitzenstrom in entweder der positiven oder der negativen Richtung und eine Dauer hat, wobei mindestens eine der Stromsektionen zwischen einem hohen Strompegel, der gleich seinem Spitzenstrom ist, und einem niedrigen Strompegel in der entgegengesetzten Richtung des Spitzenstroms mit einer Pulsierfrequenz umgeschaltet wird, die größer als die bestimmte Gesamtfrequenz ist.

Die DE 29 04 481 A1 offenbart, dass zum Zünden eines Lichtbogens eine Elektrode und ein Werkstück kurzzeitig umgepolt werden, so dass die Elektrode an dem Pluspol und das Werkstück an dem Minuspol der Stromquelle angeschlossen ist und dass im umgepolten Zustand ein Zündimpuls zwischen Elektrode und Werkstück zugeführt wird.

Die JP H06 320 272 A offenbart ein Schweißverfahren mit abschmelzbarer Elektrode. Die DE 23 13 677 A1 beschreibt ein Impulslichtbogenschweißverfahren, bei welchem ein durchgehend positiver Schweißstrom in verschiedenen Schweißphasen jeweils rechteckförmig moduliert wird. Ein weiteres WIG-Schweißverfahren ist aus der DE 603 11 994 T2 bekannt.

Vor diesem Hintergrund ist es eine Aufgabe der vorliegenden Erfindung, ein Verfahren und eine Vorrichtung zum Schweißen von Werkstücken durch einen Schweißlichtbogen mittels einer nicht abschmelzbaren Schweißelektrode zu schaffen, bei dem der Schweißlichtbogen zuverlässig gezündet wird und der Energieeintrag in das Werkstück während des Schweißprozesses optimiert eingestellt werden kann.

Diese Aufgabe wird erfindungsgemäß durch ein Verfahren mit den in Patentanspruch 1 angegebenen Merkmalen sowie durch eine Schweißvorrichtung mit den Merkmalen des Anspruchs 11 gelöst.

Bei einer möglichen Ausführungsform des erfindungsgemäßen Verfahrens umfasst eine in dem Schweißprozess verwendete Kennlinie mehrere Schweißzyklen, deren Parameter über eine Schnittstelle eingestellt werden.

Bei einer möglichen Ausführungsform des erfindungsgemäßen Verfahrens umfassen die Parameter eines Schweißzyklus entsprechend der Kennlinie insbesondere
eine Zeitdauer der Hochstromschweißphase,
eine Zeitdauer der Niedrigstromschweißphase,
ein Verhältnis der Zeitdauer der Hochstromschweißphase zu einer Zeitdauer der Niedrigstromschweißphase,
eine Stromamplitude des in der Hochstromschweißphase fließenden Schweißstromes,
eine Stromamplitude des in der Niedrigstromschweißphase fließenden Schweißstromes,
ein Verhältnis der Stromamplituden des in der Hochstromschweißphase fließenden Schweißstromes zu der Stromamplitude des in der Niedrigstromschweißphase fließenden Schweißstromes,
eine Amplitude und Frequenz der in der Hochstromschweißphase und/oder in der Niedrigstromschweißphase beim Schweißen angelegten Stromimpulse,
eine Amplitude, Frequenz und Polarität der zu Beginn der Hochstromschweißphase anlegbaren Zündimpulse.

Bei einer weiteren möglichen Ausführungsform des erfindungsgemäßen Verfahrens wird die Stromamplitude des in der Niedrigstromschweißphase des Schweißzyklus fließenden Schweißstromes in einem Bereich zwischen 0 und 10 Ampere eingestellt.

Bei einer weiteren möglichen Ausführungsform des erfindungsgemäßen Verfahrens werden Parameter der Schweißzyklen eines Schweißjobs durch einen Nutzer bzw. Schweißer mittels einer Nutzerschnittstelle manuell vor oder während des Schweißprozesses eingestellt.

In Abhängigkeit einer Höhe des Schweißstromes in der Niedrigstromschweißphase entsteht dort ein Schweißlichtbogen.

Bei einer weiteren möglichen Ausführungsform des erfindungsgemäßen Verfahrens nehmen die Stromamplituden der Hochstromschweißphasen von Schweißzyklen innerhalb eines Schweißjobs anfänglich rampenförmig zu, bleiben dann auf einem gleichbleibenden Niveau und nehmen abschließend rampenförmig ab.

Bei einer weiteren möglichen Ausführungsform des erfindungsgemäßen Verfahrens betragen die Stromamplituden der Hochstromschweißphasen bis zu 1000 Ampere.

Die Erfindung schafft ferner eine Schweißvorrichtung zum Schweißen von Werkstücken mittels eines Schweißlichtbogens, welcher zwischen einer nicht abschmelzbaren Schweißelektrode der Schweißvorrichtung und den Werkstücken gezündet wird und ein Schmelzbad erzeugt.

Im Weiteren werden mögliche Ausführungsformen des erfindungsgemäßen Schweißverfahrens und der erfindungsgemäßen Schweißvorrichtung unter Bezugnahme auf die beigefügten Figuren näher erläutert.

Es zeigen:
- Fig. 1: ein Ausführungsbeispiel einer erfindungsgemäßen Schweißvorrichtung;
- Figuren 2 bis 8: Signaldiagramme zur Erläuterung der Funktionsweise des erfindungsgemäßen Schweißverfahrens

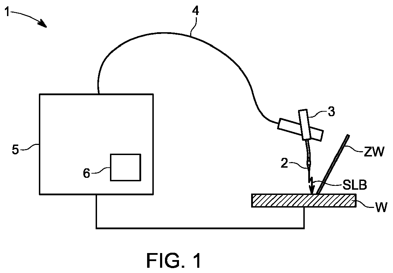

Fig. 1 zeigt ein Ausführungsbeispiel einer erfindungsgemäßen Schweißvorrichtung 1 zum Schweißen von Werkstücken W. Ein Schweißlichtbogen SLB wird zwischen einer nicht abschmelzbaren Schweißelektrode 2 der Schweißvorrichtung 1 und den zu schweißenden Werkstücken W gezündet und erzeugt ein Schmelzbad. Während des Schweißvorgangs wird ein Zusatzwerkstoff ZW zugeführt, wie in Fig. 1 dargestellt. Die nicht abschmelzbare Schweißelektrode 2 befindet sich an einem Schweißbrenner 3, der über ein Schlauchpaket 4 mit einer Schweißstromquelle 5 verbunden ist. Über das Schlauchpaket 4 kann ein Gas, insbesondere ein Schutzgas, dem Schweißbrenner 3 zugeführt werden.

Bei dem Schutzgas handelt es sich beispielsweise um, Helium oder Argon sowie deren Gemische. Es können auch geringe Anteile an aktiven Gasen dem Gasgemisch hinzugefügt werden. Bei der nicht abschmelzbaren Schweißelektrode 2 handelt es sich beispielsweise um eine Wolframelektrode. Innerhalb des Schlauchpakets 4 befinden sich neben den Gaszuführleitungen für das Schutzgas auch Strom- bzw. Schweißleitungen zur Versorgung des Schweißbrenners 3 mit elektrischem Strom. Dieser elektrische Strom wird durch die Schweißstromquelle 5 zur Verfügung gestellt.

Bei der erfindungsgemäßen Schweißvorrichtung 1 bzw. dem erfindungsgemäßen Schweißgerät erfolgt das Schweißen des Werkstückes W in einem Schweißprozess mit mehreren Schweißzyklen SZ, deren Parameter über eine Schnittstelle 6 der Schweißvorrichtung 1 einstellbar sind. Bei der in Fig. 1 dargestellten Ausführungsform ist die Schnittstelle 6 zur Einstellung der Parameter an der Schweißstromquelle 5 vorgesehen. Alternativ oder zusätzlich kann auch eine Nutzerschnittstelle 6 an dem Schweißbrenner 3 vorgesehen sein.

Jeder Schweißprozess umfasst einen oder mehrere Schweißzyklen SZ. Bei der erfindungsgemäßen Schweißvorrichtung 1 weist jeder Schweißzyklus SZ des Schweißprozesses eine Hochstromschweißphase HSP und eine Niedrigstromschweißphase NSP auf. Während der Hochstromschweißphase HSP fließt ein elektrischer Schweißstrom I mit hoher Stromamplitude, wohingegen in der Niedrigstromschweißphase NSP des Schweißzyklus SZ lediglich ein Schweißstrom I mit niedriger Stromamplitude fließt.

In der Hochstromschweißphase HSP werden bei entsprechender Einstellung des betreffenden Schweißzyklus SZ zusätzlich Stromimpulse zur Erzeugung von Schwingungen in dem erzeugten Schmelzbad angelegt. Weiterhin werden zu Beginn der Hochstromschweißphase HSP bei entsprechender Einstellung des betreffenden Schweißzyklus SZ zum berührungslosen Zünden des Schweißlichtbogens SLB hochfrequente Zündimpulse ZI zur Ionisation einer Strecke zwischen der Schweißelektrode 2 und den Werkstücken W angelegt. Um die Oberflächenspannung zu brechen werden die Stromimpulse dazugeschaltet. Die RPI (hochfrequente Zündimpulse mit umgekehrter Polarität) werden verwendet, um die Zündeigenschaften zu verbessern. Eine Umpolung des Schweißstromes bedeutet eine höhere Temperatur an der Wolframelektrode, dadurch wird die Luftstrecke zwischen Elektrode und Werkstückoberfläche besser ionisiert.

Während des Schweißprozesses kann ein Schweißjob verwendet werden, welcher mehrere Schweißzyklen SZ umfasst. Diese Parameter sind über die Schnittstelle 6 der Schweißvorrichtung 1 einstellbar. Die Parameter der Schweißzyklen SZ des Schweißjobs können erfindungsgemäß durch einen Schweißer mittels einer Nutzerschnittstelle, beispielsweise mittels der in der Stromquelle 5 vorgesehenen Nutzerschnittstelle 6 manuell vor oder während der Durchführung des Schweißprozesses eingestellt werden. Erfindungsgemäß befinden sich mehrere auswählbare Schweißjobs zur Einstellung ihrer Schweißparameter in einem Datenspeicher. Bei einer möglichen Ausführungsform ist dieser Datenspeicher in der Schweißstromquelle 5 integriert. Alternativ kann der Datenspeicher auch über eine Datenschnittstelle mit der Schweißstromvorrichtung 1 verbunden sein. Eine Anpassung der Schweißjobs kann beispielsweise erfolgen, sobald definierte Schwellenwerte oder Triggerpunkte des Schweißjobs erreicht werden.

Bei einer möglichen Ausführungsform der Schweißvorrichtung 1 wird ein in dem Datenspeicher gespeicherter Schweißjob zunächst ausgelesen und nach Einstellung der Schweißparameter der verschiedenen Schweißzyklen SZ des ausgewählten Schweißjobs entsprechend angepasst und auf den Datenspeicher zurückgeschrieben. Auf diese Weise hat jeder Schweißer die Möglichkeit, einen Schweißjob entsprechend seinen eigenen Erfahrungen und Präferenzen anzupassen und für den weiteren Gebrauch in dem Datenspeicher zu hinterlegen.

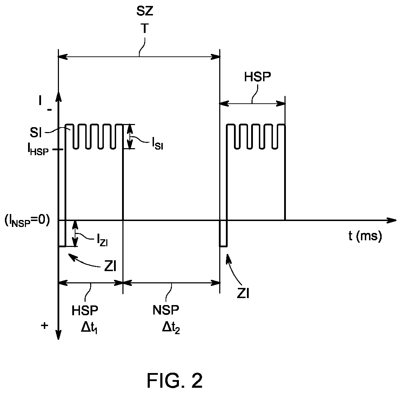

Fig. 2 zeigt ein Signaldiagramm zur Erläuterung der Funktionsweise eines erfindungsgemäßen Verfahrens zum Schweißen von Werkstücken W mithilfe eines Schweißlichtbogens SLB. Der Schweißlichtbogen SLB wird zwischen der nicht abschmelzbaren Schweißelektrode 2 und den Werkstücken W gezündet und erzeugt dort ein Schmelzbad. Das Schweißen der Werkstücke W erfolgt in dem Schweißprozess mit einstellbaren Schweißzyklen SZ wie in Fig. 2 dargestellt. Jeder Schweißzyklus SZ umfasst eine Hochstromschweißphase HSP und eine Niedrigstromschweißphase NSP. Während der Hochstromschweißphase HSP fließt ein Schweißstrom I mit einer hohen Stromamplitude I_{HSP}. In der nachfolgenden Niedrigstromschweißphase NSP fließt ein Schweißstrom I mit niedriger Stromamplitude I_{NSP}. Übersteigt die Stromamplitude I_{NSP} einen Schwellenwert, besteht auch in der Niedrigstromschweißphase ein Schweißlichtbogen SLB. Bei dem in Fig. 2 dargestellten Ausführungsbeispiel ist die niedrige Stromamplitude I_{NSP} gleich null (I_{NSP} = 0A), d.h. es brennt kein Lichtbogen. Die Dauer der Hochstromschweißphase HSP beträgt Δt₁ und die Dauer der Niedrigstromschweißphase NSP beträgt Δt₂. Die Dauer des einstellbaren Schweißzyklus SZ beträgt T = Δt₁ + Δt₂. In der Hochstromschweißphase HSP des Schweißzyklus SZ werden bei entsprechender Einstellung des betreffenden Schweißzyklus SZ der hohen Stromamplitude I_{HSP} zusätzlich Stromimpulse SI zur Erzeugung von Schwingungen in dem Schmelzbad überlagert, wie in Fig. 2 dargestellt. Die Impulsfrequenz beträgt vorzugsweise 0,2Hz bis 20kHz. Die Stromamplitude der Stromimpulse SI kann in einem Bereich von 0A bis 1100A liegen. Ferner wird zu Beginn der Hochstromschweißphase HSP bei entsprechender Einstellung des betreffenden Schweißzyklus SZ zum berührungslosen Zünden des Schweißlichtbogens SLB hochfrequente Zündimpulse ZI zur Ionisation einer Strecke zwischen der Schweißelektrode 2 und den Werkstücken W angelegt. In dem Ausführungsbeispiel in Fig. 2 ist nur ein Zündimpuls dargestellt. Es können jedoch auch mehrere Zündimpulse Z zu Beginn der Hochstromphase HSP erzeugt werden.

Der Schweißzyklus SZ, wie er in Fig. 2 dargestellt ist, umfasst verschiedene Parameter. Bei diesen Parametern handelt es sich um eine Zeitdauer Δt₁ der Hochstromschweißphase HSP, eine Zeitdauer Δt₂ der Niedrigstromschweißphase NSP, ein Verhältnis der Zeitdauer Δt₁ der Hochstromschweißphase HSP zu der Zeitdauer Δt₂ der Niedrigstromschweißphase NSP, eine Stromamplitude I_{HSP} des in der Hochstromschweißphase HSP fließenden Schweißgrundstromes I, eine Stromamplitude I_{NSP} des in der Niedrigstromschweißphase NSP fließenden Schweißstromes I, ein Verhältnis der Stromamplituden des in der Hochstromschweißphase HSP fließenden Schweißgrundstromes I_{NSP} zu der Stromamplitude des in der Niedrigstromschweißphase NSP fließenden Schweißgrundstromes I_{NSP}, eine Amplitude I_{SI}, und eine Frequenz f_{SI} der in der Hochstromschweißphase HSP dem Schweißstrom I überlagerten Stromimpulse SI sowie eine Amplitude I_{ZI}, Frequenz und Polarität der zu Beginn der Hochstromschweißphase HSP anlegbaren Zündimpulse ZI.

Ein Schweißer oder Nutzer kann verschiedene Schweißparameter über die Nutzerschnittstelle 6 bei einer möglichen Ausführungsform vor oder während des Schweißprozesses einstellen. Weiterhin können Parameter der Schweißzyklen SZ eines Schweißjobs situationsbedingt in Abhängigkeit von erfassten Messwerten vor oder während des Schweißprozesses eingestellt werden. Die Stromamplituden des Schweißstromes I in den Hochstromschweißphasen HSP können bis zu 1000 Ampere betragen.

Zum Zünden des Schweißlichtbogens SLB werden zu Beginn der Hochstromschweißphase HSP hochfrequente Zündimpulse ZI angelegt. Für die Zündung des Schweißlichtbogens SLB können unterschiedliche Zündprozesse ausgeführt werden, insbesondere eine HF-Zündung. Vorteilhafterweise ist die HF-Zündung mit umgekehrter Polarität ausgeführt (RPI Reverse Polarity Ignition). Der berührungslose Zündvorgang kann mithilfe von hochfrequenten Zündimpulsen ZI innerhalb mehrerer Impulspakete erfolgen. Das berührungslose Zünden des Schweißlichtbogens SLB dient vor allem zur Ionisation der Wegstrecke zwischen der Schweißelektrode 2 und dem Werkstück W. Nach dem Zünden des Schweißlichtbogens SLB wird der Schweißstrom I zugeschaltet. Hochfrequente Zündimpulse ZI können innerhalb einer oder mehrerer Impulspakete mit einer vorgegebenen Frequenz innerhalb einer Zündzeitdauer angelegt werden. Hierdurch wird eine Vorionisierung der Luft bzw. des Umgebungsgases zwischen der Schweißelektrode 2 und dem Werkstück W erreicht, sodass eine schnelle und sichere Zündung des Schweißlichtbogens SLB stattfindet. Ein Impulspaket kann mehrere Zündimpulse umfassen, beispielsweise bis zu 500 HF-Zündimpulse. Die Anzahl der Zündimpulse ZI kann dabei von der gewählten Zünddauer und der Frequenz der Zündimpulse ZI abhängen. Die Einkopplung der HF-Zündung in den Schweißkreis kann beispielsweise kapazitiv (Kondensator) oder induktiv (Spule) ausgeführt sein. Die Frequenz und Anzahl der Zündimpulse ZI ist bei einer möglichen Ausführungsform für unterschiedliche Anwendungsfälle einstellbar. Durch die paketweise angelegten Zündimpulse ZI lässt sich eine exakte und sichere sowie schnelle Zündung des Schweißlichtbogens SLB erreichen.

Nach dem erfolgten Zünden werden im weiteren Verlauf der Hochstromschweißphase HSP der hohen Stromamplitude I_{HSP} Stromimpulse SI zur Erzeugung von Schwingungen in dem erzeugten Schmelzbad überlagert, wie in Fig. 2 ebenfalls dargestellt. Die Amplitude I_{SI} dieser Stromimpulse SI ist ebenfalls einstellbar. Durch die pulsförmige Energieeinbringung während der Hochstromschweißphase HSP durch den hohen Schweißgrundstrom I_{HSP} überlagerten Stromimpulse SI wird das Schmelzbad in Schwingung versetzt. Durch die Schwingungen des Schmelzbades erfolgt ein leichteres Zusammenfließen des Schmelzbades zwischen den beteiligten Werkstücken W. Weiterhin kann durch die Amplitude I_{SI} der Stromimpulse der erfolgte Energieeintrag genauer gesteuert werden. Die verschiedenen Pulsparameter der Stromimpulse SI, insbesondere die Pulshöhe, Pulsbreite, Pulsfrequenz, Pulspause und Pulsform, können bei einer möglichen Ausführungsform über die Nutzerschnittstelle 6 an der Stromquelle 5 eingestellt werden.

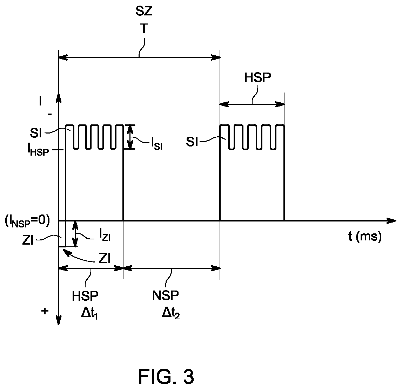

Fig. 3 zeigt ein weiteres Signaldiagramm zur Erläuterung der Funktionsweise des erfindungsgemäßen Schweißverfahrens. Bei der dargestellten Ausführungsform erfolgt das Anlegen der hochfrequenten Zündimpulse ZI nur während des ersten Schweißzyklus SZ. Beim nachfolgenden zweiten Schweißzyklus SZ erfolgt eine Zündung des Schweißlichtbogens SLB ohne Anlegen von hochfrequenten Zündimpulsen ZI. Bei dem in Fig. 3 dargestellten Ausführungsbeispiel ist die Stromamplitude I_{NSP} während der Niedrigstromschweißphase NSP null (I_{NSP} = 0A).

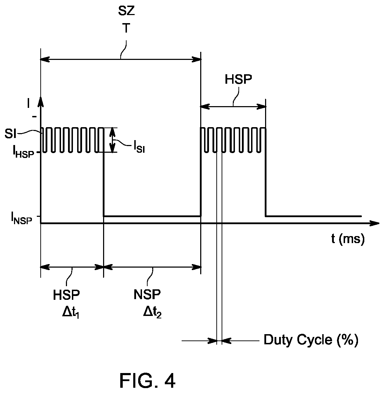

Fig. 4 zeigt ein weiteres Ausführungsbeispiel des erfindungsgemäßen Verfahrens. Bei dem in Fig. 4 dargestellten Ausführungsbeispiel beträgt die Stromamplitude I_{NSP} während der Niedrigstromschweißphase NSP nicht null, sondern kann in einem vorgegebenen Bereich von beispielsweise 0 bis 3 Ampere durch den Nutzer eingestellt werden. Die Zeitperiode (Duty Cycle) der überlagerten Stromimpulse SI während der Hochstromschweißphase HSP ist in Fig. 4 ebenfalls dargestellt und kann bei einer möglichen Ausführungsform durch einen Nutzer entsprechend eingestellt werden, um den Energieeintrag zu steuern. Je mehr Impulse eingestellt werden, desto höher ist der Energieeintrag. Beim diesem Ausführungsbeispiel erfolgt eine Zündung des Schweißlichtbogens SLB ohne Anlegen von hochfrequenten Zündimpulsen ZI.

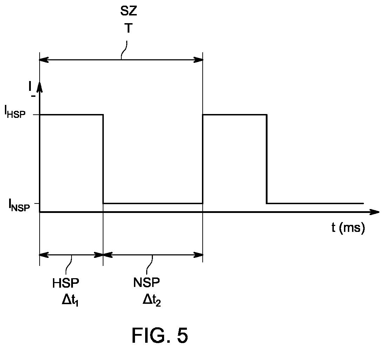

Fig. 5 zeigt ein weiteres Ausführungsbeispiel des erfindungsgemäßen Verfahrens. Bei dieser Ausführungsform fließt während der Niedrigstromschweißphase NSP ebenfalls ein Schweißstrom I mit einer niedrigen Stromamplitude I_{NSP} in einem Bereich von 0 bis 3 Ampere. Bei dem in Fig. 5 dargestellten Ausführungsbeispiel erfolgt während der Hochstromschweißphase HSP keine Überlagerung der hohen Stromamplitude I_{HSP} durch Stromimpulse SI. Die Stromimpulse SI sowie die hochfrequenten Zündimpulse mit positiver Polarität ZI können somit vorzugsweise zu- oder weggeschaltet werden, je nach Anwendungsfall und Präferenz des Nutzers.

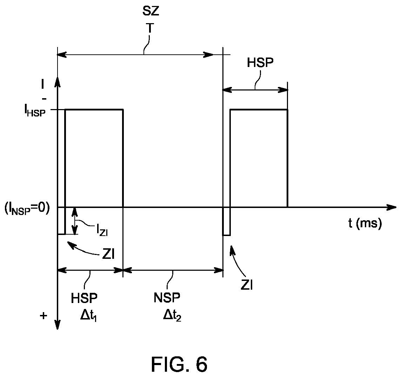

Fig. 6 zeigt ein weiteres Ausführungsbeispiel des erfindungsgemäßen Verfahrens. Bei dem dargestellten Ausführungsbeispiel erfolgt während der Niedrigstromschweißphase NSP kein Stromfluss (I_{NSP} = 0A). Darüber hinaus erfolgt ein Zünden des Schweißlichtbogens SLB jeweils zu Beginn eines jeden Schweißzyklus SZ (Reverse Polarity Ignition RPI) durch HF-Zündimpulse ZI.

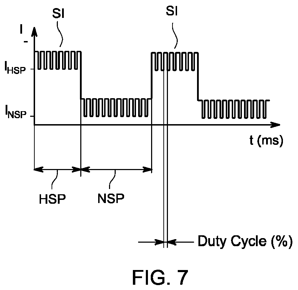

Bei dem in Fig. 7 dargestellten Ausführungsbeispiel werden sowohl in der Hochstromschweißphase HSP als auch in der Niedrigstromschweißphase NSP Stromimpulse SI angelegt.

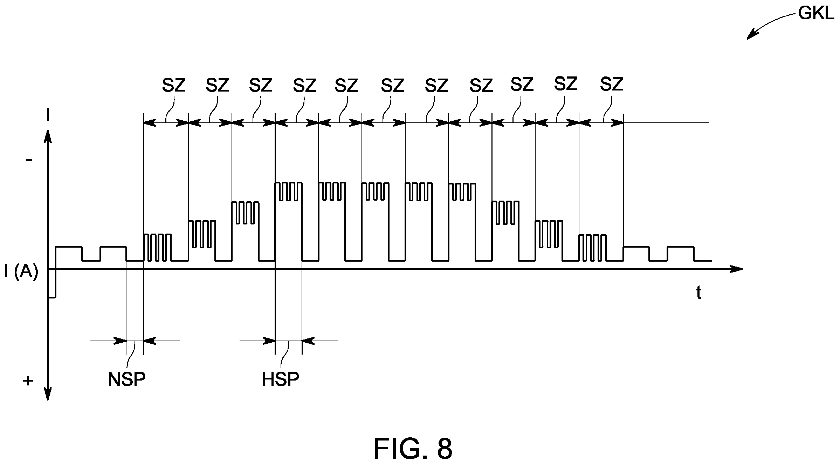

Fig. 8 zeigt ein weiteres Signaldiagramm zur Erläuterung der Funktionsweise des erfindungsgemäßen Verfahrens. Fig. 8 zeigt mehrere Schweißzyklen SZ, die insgesamt einen möglichen Schweißjob bilden. Bei dem dargestellten Ausführungsbeispiel nehmen die Stromamplituden I_{HSP} der Hochstromschweißphasen HSP von Schweißzyklen SZ innerhalb der Schweißjobs anfänglich rampenförmig zu und bleiben über mehrere Schweißzyklen SZ konstant und nehmen abschließend rampenförmig ab. Bei einer möglichen Ausführungsform sind die Schweißparameter der verschiedenen innerhalb des Schweißjobs enthaltenen Schweißzyklen SZ individuell einstellbar. Bei einer weiteren möglichen Ausführungsform kann eine vorgegebene Grundkennlinie GKL, beispielsweise wie in Fig. 8 dargestellt, aus einem Datenspeicher ausgelesen werden und ggf. durch einen Schweißer vor oder während des Schweißprozesses für den betreffenden Anwendungsfall adjustiert bzw. eingestellt werden. Bei einer möglichen Ausführungsform wird eine aus einem Datenspeicher ausgelesene Grundkennlinie bzw. Schweißjob nach Einstellung der Schweißparameter durch einen Nutzer als angepasster Schweißjob in den entsprechenden Datenspeicher zurückgeschrieben. Der Datenspeicher kann beispielsweise in der Schweißstromquelle 5 des Schweißgerätes vorgesehen sein. Der entsprechend angepasste Schweißjob kann durch den betreffenden Nutzer in den Datenspeicher als Datenbankeintrag zurückgeschrieben werden und für spätere Schweißprozesse durch den Nutzer wieder herangezogen werden. Auf diese Weise hat ein Nutzer die Möglichkeit, eine Grundschweißkennlinie GKL für seine spezifischen Bedürfnisse und Präferenzen zu individualisieren und für Schweißprozesse aus dem Datenspeicher bei Bedarf auszulesen. Das erfindungsgemäße Schweißverfahren erlaubt eine zuverlässige Zündung der nicht abschmelzbaren Schweißelektrode 2 sowie eine genaue Einstellung des Energieeintrages während eines Schweißprozesses. Hierdurch kann die Qualität der erzeugten Schweißnaht gesteigert werden.

Bei einer möglichen Ausführungsform weist das Schweißgerät 1 eine grafische Nutzerschnittstelle 6 mit einer Anzeigeeinheit auf. Die grafische Nutzerschnittstelle 6 kann beispielsweise in der Schweißstromquelle 5 integriert sein. Alternativ kann eine Nutzerschnittstelle 6 auch an dem Schweißbrenner 3 oder an einem tragbaren Gerät vorgesehen sein, das mit einer Steuerung des Schweißgerätes 1 kommuniziert. Die Nutzerschnittstelle 6 umfasst beispielsweise einen Touchscreen, welcher es dem Nutzer bzw. Schweißer erlaubt, die verschiedenen Schweißparameter der verschiedenen Schweißzyklen SZ eines Schweißjobs individuell einzustellen. Bei einer bevorzugten Ausführungsform wird der Schweißjob mit den einzelnen Schweißzyklen SZ auf der Anzeigeeinheit der Nutzerschnittstelle 6 angezeigt und kann durch den Nutzer für seine Zwecke adaptiert werden. Beispielsweise wird der in Fig. 8 dargestellte Schweißjob bei einer möglichen Ausführungsform dem Nutzer über die Anzeigeeinheit angezeigt. Der Nutzer kann durch entsprechende Betätigung des Touchscreens auf bestimmte Stellen des Schweißjobs, beispielsweise auf bestimmte Phasen (HSP, NSP) eines einzelnen Schweißzyklus SZ, zoomen. Beispielsweise kann durch eine Bewegung von zwei Fingern in entgegengesetzte Richtung auf eine bestimmte Stelle innerhalb des Schweißjobs gezoomt bzw. fokussiert werden, um dort bestimmte Schweißparameter manuell einzustellen. Beispielsweise kann ein Nutzer an dem Touchscreen durch entsprechende Fingerbewegungen die Amplituden und Zeitdauern bzw. Zeitperioden reduzieren oder strecken bzw. erhöhen. Dies erlaubt eine schnelle und intuitive Anpassung der entsprechenden Schweißjobs durch den Nutzer. Beispielsweise kann ein Nutzer individuell für verschiedene Schweißzyklen SZ durch einen manuellen Eingabebefehl, beispielsweise Antippen der Oberfläche des Touchscreens, Zündimpulse ZI bzw. Zündimpulspakete zu Beginn des Schweißzyklus SZ setzen oder deaktivieren. Auch die Amplitude der überlagerten Stromimpulse SI kann durch eine entsprechende Eingabe des Nutzers für jeden Schweißzyklus SZ des Schweißjobs individuell angepasst werden. Dies erlaubt eine einfache und sehr flexible Anpassung des Schweißjobs bzw. der Kennlinie für den Schweißer und damit eine optimale Anpassung für den jeweiligen Anwendungsfall. Auch die Amplitude, Frequenz und Polarität der zu Beginn der Hochstromschweißphase HSP angelegten Zündimpulse ZI kann beispielsweise durch den Nutzer manuell ausgewählt werden.

## Patentansprüche

1. Verfahren zum Schweißen von Werkstücken (W) mit einem Schweißlichtbogen (SLB), welcher zwischen einer nicht abschmelzbaren Schweißelektrode (2) und den Werkstücken (W) gezündet wird und ein Schmelzbad erzeugt,
wobei das Schweißen der Werkstücke (W) in einem Schweißprozess mit einstellbaren Schweißzyklen (SZ) erfolgt, die jeweils eine Hochstromschweißphase (HSP), während der ein Schweißstrom (I) mit einer hohen Stromamplitude (I_{HSP}) fließt, und
eine Niedrigstromschweißphase (NSP), während der ein Schweißstrom (I) mit niedriger Stromamplitude (I_{NSP}) fließt, aufweisen,
wobei in der Hochstromschweißphase (HSP) des Schweißzyklus (SZ) bei entsprechender Einstellung des betreffenden Schweißzyklus (SZ) der hohen Stromamplitude (I_{HSP}) Stromimpulse (SI) angelegt werden, und,
wobei zu Beginn der Hochstromschweißphase (HSP) bei entsprechender Einstellung des betreffenden Schweißzyklus (SZ) zum berührungslosen Zünden des Schweißlichtbogens (SLB) hochfrequente Zündimpulse (ZI) umgekehrter Polarität angelegt werden.

2. Verfahren nach Anspruch 1,
wobei ein in dem Schweißprozess verwendeter Schweißjob mehrere Schweißzyklen (SZ) umfasst, deren Parameter über eine Schnittstelle (6) eingestellt werden.

3. Verfahren nach Anspruch 2,
wobei die Parameter eines Schweißzyklus (SZ) des Schweißjobs aufweisen:
eine Zeitdauer (Δt₁) der Hochstromschweißphase (HSP),
eine Zeitdauer (Δt₂) der Niedrigstromschweißphase (NSP),
ein Verhältnis der Zeitdauer (Δt₁) der Hochstromschweißphase (HSP) zu der Zeitdauer (Δt₂) der Niedrigstromschweißphase (NSP),
eine Stromamplitude (I_{HSP}) des in der Hochstromschweißphase (HSP) fließenden Schweißstromes (I),
eine Stromamplitude (I_{NSP}) des in der Niedrigstromschweißphase (NSP) fließenden Schweißstromes (I),
ein Verhältnis der Stromamplituden des in der Hochstromschweißphase (HSP) fließenden Schweißstromes (I) zu der Stromamplitude des in der Niedrigstromschweißphase (NSP) fließenden Schweißstromes (I),
eine Amplitude (I_{SI}) und Frequenz (f_{SI}) der in der Hochstromschweißphase (HSP) und/oder Niedrigstromschweißphase (NSP) angelegten Stromimpulse (SI),
eine Amplitude, Frequenz und Polarität der zu Beginn der Hochstromschweißphase (HSP) anlegbaren Zündimpulse (ZI).

4. Verfahren nach einem der vorangehenden Ansprüche 1 bis 3, wobei die Höhe des Schweißstromes derart eingestellt wird, dass in der Niedrigstromschweißphase (NSP) ein Schweißlichtbogen (SLB) vorhanden ist.

5. Verfahren nach einem der vorangehenden Ansprüche 1 bis 4, wobei Parameter der Schweißzyklen (SZ) eines Schweißjobs durch einen Schweißer mittels einer Nutzerschnittstelle (6) manuell vor oder während des Schweißprozesses eingestellt werden.

6. Verfahren nach einem der vorangehenden Ansprüche 1 bis 5, wobei Stromamplituden der Hochstromschweißphasen (HSP) von Schweißzyklen (SZ) innerhalb eines Schweißjobs anfänglich rampenförmig zunehmen, dann auf einem gleichbleibendem Niveau bleiben und abschließend rampenförmig abnehmen.

7. Verfahren nach einem der vorangehenden Ansprüche 1 bis 3, 5 oder 6,
wobei die Stromamplituden der Hochstromschweißphasen (HSP) bis zu 1000 Ampere betragen und/oder wobei die Stromamplituden der Niedrigstromphasen (NSP) von 0 bis 100 Ampere reichen.

8. Verfahren nach einem der vorangehenden Ansprüche 1 bis 3 oder 5 bis 7, wobei die Stromamplitude des in der Niedrigstromschweißphase des Schweißzyklus fließenden Schweißstromes in einem Bereich zwischen 0 und 10 Ampere eingestellt wird.

9. Verfahren nach einem der vorangehenden Ansprüche, wobei die hochfrequenten Zündimpulse (ZI) innerhalb eines oder mehrerer Impulspakete mit einer vorgegebenen Frequenz innerhalb einer Zündzeitdauer angelegt werden, wobei ein Impulspaket mehrere Zündimpulse umfasst.

10. Verfahren nach einem der vorangehenden Ansprüche, wobei zusätzlich in der Niedrigstromschweißphase (NSP) des Schweißzyklus (SZ) bei entsprechender Einstellung des betreffenden Schweißzyklus (SZ) der hohen Stromamplitude (I_{HSP}) Stromimpulse (SI) angelegt werden.

11. Schweißvorrichtung (1) zum Schweißen von Werkstücken (W), mit:
einer nicht abschmelzbaren Schweißelektrode (2);
einem Schweißbrenner (3), an dem sich die nicht abschmelzbare Schweißelektrode (2) befindet;
einer Schweißstromquelle (5), mit welcher der Schweißbrenner (3) über ein Schlauchpaket (4) verbunden ist, wobei dem Schweißbrenner (3) über das Schlauchpaket (4) Schutzgas zuführbar ist und wobei sich in dem Schlauchpaket (4) Leitungen zur Versorgung des Schweißbrenners 3 mit elektrischem Strom aus der Schweißstromquelle (5) befinden;
einem Datenspeicher, in dem sich mehrere auswählbare Schweißjobs zur Einstellung ihrer Schweißparameter befinden, wobei jeder Schweißjob mehrere Schweißzyklen (SZ) eines Schweißprozesses zum Schweißen der Werkstücke (W) umfasst, wobei jeder Schweißzyklus (SZ) des Schweißprozesses eine Hochstromschweißphase (HSP), während der ein Schweißstrom (I) mit hoher Stromamplitude (I_{HSP}) fließt, und eine Niedrigstromschweißphase (NSP), während der ein Schweißstrom (I) mit niedriger Stromamplitude (I_{NSP}) fließt, aufweist, wobei in der Hochstromschweißphase (HSP) des Schweißzyklus (SZ) bei entsprechender Einstellung des betreffenden Schweißzyklus (SZ) der hohen Stromamplitude (I_{HSP}) Stromimpulse (SI) angelegt werden, und wobei zu Beginn der Hochstromschweißphase (HSP) bei entsprechender Einstellung des betreffenden Schweißzyklus (SZ) zum berührungslosen Zünden des Schweißlichtbogens (SLB) hochfrequente Zündimpulse (ZI) umgekehrter Polarität angelegt werden; und
eine Schnittstelle (6), über welche ein Schweißjob aus dem Datenspeicher auswählbar und Parameter der Schweißzyklen des Schweißjobs einstellbar sind;
wobei die Schweißvorrichtung (1) dazu ausgebildet ist, zum Verschweißen der Werkstücke (W) einen Schweißlichtbogen (SLB) zwischen der nicht abschmelzbaren Schweißelektrode (2) der Schweißvorrichtung (1) und den Werkstücken (W) zu zünden und ein Schmelzbad zu erzeugen und einen Schweißprozess mit mehreren Schweißzyklen (SZ) gemäß den über die Schnittstelle eingestellten Parametern der Schweißzyklen des Schweißjobs auszuführen.

## Claims

1. Method for welding workpieces (W) using a welding arc (SLB) which is ignited between a non-consumable welding electrode (2) and the workpieces (W) and creates a weld pool,
wherein the workpieces (W) are welded in a welding process having settable welding cycles (SZ), which each include a high-current welding phase (HSP) during which a welding current (I) of high current amplitude (I_{HSP}) flows and
a low-current welding phase (NSP) during which a welding current (I) of low current amplitude (I_{NSP}) flows, wherein, in the high-current welding phase (HSP) of the welding cycle (SZ), with an according setting of the relevant welding cycle (SZ), current pulses (SI) are applied to the high current amplitude (I_{HSP}), and
wherein, at the start of the high-current welding phase (HSP), with an according setting of the relevant welding cycle (SZ), high-frequency ignition pulses (ZI) of reverse polarity are applied for contactless ignition of the welding arc (SLB).

2. Method according to claim 1,
wherein a welding job used in the welding process comprises a plurality of welding cycles (SZ), the parameters of which are set via an interface (6).

3. Method according to claim 2,
wherein the parameters of a welding cycle (SZ) of the welding job include:
a duration (Δt₁) of the high-current welding phase (HSP),
a duration (Δt₂) of the low-current welding phase (NSP),
a ratio of the duration (Δt₁) of the high-current welding phase (HSP) to the duration (Δt₂) of the low-current welding phase (NSP),
a current amplitude (I_{HSP}) of the welding current (I) flowing in the high-current welding phase (HSP),
a current amplitude (I_{NSP}) of the welding current (I) flowing in the low-current welding phase (NSP),
a ratio of the current amplitudes of the welding current (I) flowing in the high-current welding phase (HSP) to the welding current (I) flowing in the low-current welding phase (NSP),
an amplitude (I_{SI}) and frequency (f_{SI}) of the current pulses (SI) applied in the high-current welding phase (HSP) and/or low-current welding phase (NSP),
an amplitude, frequency and polarity of the ignition pulses (ZI) applicable at the start of the high-current welding phase (HSP).

4. Method according to any of preceding claims 1 to 3,
wherein the level of the welding current is set in such a way that a welding arc (SLB) is present in the low-current welding phase (NSP).

5. Method according to any of preceding claims 1 to 4,
wherein parameters of the welding cycles (SZ) of a welding job are set manually by a welder before or during the welding process by way of a user interface (6).

6. Method according to any of preceding claims 1 to 5,
wherein current amplitudes of the high-current welding phases (HSP) of welding cycles (SZ) within a welding job initially ramp up, subsequently remain at a constant level, and finally ramp down.

7. Method according to any of preceding claims 1 to 3, 5 or 6,
wherein the current amplitudes of the high-current welding phases (HSP) are up to 1000 amps and/or wherein the current amplitudes of the low-current phases (NSP) range from 0 to 100 amps.

8. Method according to any of preceding claims 1 to 3 or 5 to 7,
wherein the current amplitudes of the welding current flowing in the low-current welding phase of the welding cycle are set in a range between 0 and 10 amps.

9. Method according to any of the preceding claims,
wherein the high-frequency ignition pulses (ZI) are applied within one or more pulse packets at a predetermined frequency within an ignition duration, a pulse packet comprising a plurality of ignition pulses.

10. Method according to any of the preceding claims,
wherein additionally, in the low-current welding phase (NSP) of the welding cycle (SZ), with appropriate setting of the relevant welding cycle (SZ), current pulses (SI) are applied to the high current amplitude (I_{HSP}).

11. Welding device (1) for welding workpieces (W), comprising:
a non-consumable welding electrode (2);
a welding torch (3) on which the non-consumable welding electrode (2) is located;
a welding power source (5) to which the welding torch (3) is connected via a cable assembly (4), it being possible to supply shielding gas to the welding torch (3) via the cable assembly (4), and lines for supplying electric current from the welding power source (5) to the welding torch (3) being located in the cable assembly (4);
a data store in which a plurality of selectable welding jobs are located for setting their welding parameters, each welding job comprising a plurality of welding cycles (SZ) of a welding process for welding the workpieces (W), each welding cycle (SZ) of the welding process including a high-current welding phase (HSP) during which a welding current (I) of high current amplitude (I_{HSP}) flows and a low-current welding phase (NSP) during which a welding current (I) of low current amplitude (I_{NSP}) flows,
wherein, in the high-current welding phase (HSP) of the welding cycle (SZ), with appropriate setting of the relevant welding cycle (SZ), current pulses (SI) are applied to the high current amplitude (I_{HSP}), and wherein,
at the start of the high-current welding phase (HSP), with appropriate setting of the relevant welding cycle (SZ), high-frequency ignition pulses (ZI) of reverse polarity are applied for contactless ignition of the welding arc (SLB); and
an interface (6) via which a welding job can be selected from the data store and parameter of the welding cycles of the welding job can be set;
wherein, to weld the workpieces (W), the welding device (1) is configured to ignite a welding arc (SLB) between the non-consumable welding electrode (2) of the welding device (1) and the workpieces (W) and create a weld pool, and to carry out a welding process comprising a plurality of welding cycles (SZ) in accordance with the parameters, set via the interface, of the welding cycles of the welding job.

## Revendications

1. Procédé pour souder des pièces (W) avec un arc de soudage (SLB) qui est amorcé entre une électrode de soudage non consommable (2) et les pièces (W) et qui génère un bain fondu,
dans lequel le soudage des pièces (W) est réalisé dans un processus de soudage à cycles de soudage (SZ) réglables, qui comportent respectivement
une phase de soudage à courant élevé (HSP) au cours de laquelle un courant de soudage (I) ayant une amplitude de courant élevée (I_{HSP}) circule, et une phase de soudage à courant faible (NSP) au cours de laquelle un courant de soudage (I) ayant une amplitude de courant faible (I_{NSP}) circule,
dans lequel pendant la phase de soudage à courant élevé (HSP) du cycle de soudage (SZ) avec un réglage correspondant du cycle de soudage (SZ) concerné, des impulsions de courant (SI) sont appliquées à l'amplitude de courant élevée (I_{HSP}), et
dans lequel au début de la phase de soudage à courant élevé (HSP) avec un réglage correspondant du cycle de soudage (SZ) concerné, des impulsions d'amorçage à haute fréquence (ZI) à polarité inversée sont appliquées pour l'amorçage sans contact de l'arc de soudage (SLB).

2. Procédé selon la revendication 1,
dans lequel un travail de soudage utilisé dans le processus de soudage comprend plusieurs cycles de soudage (SZ) dont les paramètres sont réglés par l'intermédiaire d'une interface (6).

3. Procédé selon la revendication 2,
dans lequel les paramètres d'un cycle de soudage (SZ) du travail de soudage comportent :
une durée (Δt₁) de la phase de soudage à courant élevé (HSP),
une durée (Δt₂) de la phase de soudage à courant faible (NSP),
un rapport entre la durée (Δt₁) de la phase de soudage à courant élevé (HSP) et la durée (Δt₂) de la phase de soudage à courant faible (NSP),
une amplitude de courant (I_{HSP}) du courant de soudage (I) circulant pendant la phase de soudage à courant élevé (HSP),
une amplitude de courant (I_{NSP}) du courant de soudage (I) circulant pendant la phase de soudage à courant faible (NSP),
un rapport entre les amplitudes de courant du courant de soudage (I) circulant pendant la phase de soudage à courant élevé (HSP) et l'amplitude de courant du courant de soudage (I) circulant pendant la phase de soudage à courant faible (NSP),
une amplitude (I_{SI}) et une fréquence (f_{SI}) des impulsions de courant (SI) appliquées pendant la phase de soudage à courant élevé (HSP) et/ou la phase de soudage à courant faible (NSP),
une amplitude, une fréquence et une polarité des impulsions d'amorçage (ZI) pouvant être appliquées au début de la phase de soudage à courant élevé (HSP).

4. Procédé selon l'une des revendications 1 à 3 précédentes, dans lequel la hauteur du courant de soudage est réglée de telle sorte qu'un arc de soudage (SLB) est présent pendant la phase de soudage à courant faible (NSP).

5. Procédé selon l'une des revendications 1 à 4 précédentes, dans lequel des paramètres des cycles de soudage (SZ) d'un travail de soudage sont réglés manuellement par un soudeur au moyen d'une interface utilisateur (6) avant ou pendant le processus de soudage.

6. Procédé selon l'une des revendications 1 à 5 précédentes, dans lequel des amplitudes de courant des phases de soudage à courant élevé (HSP) de cycles de soudage (SZ) augmentent initialement sous forme de rampe pendant un travail de soudage, puis restent à un niveau constant et diminuent finalement sous forme de rampe.

7. Procédé selon l'une des revendications 1 à 3, 5 ou 6 précédentes,
dans lequel les amplitudes de courant des phases de soudage à courant élevé (HSP) vont jusqu'à 1 000 ampères et/ou dans lequel les amplitudes de courant des phases à courant faible (NSP) atteignent de 0 à 100 ampères.

8. Procédé selon l'une des revendications 1 à 3 ou 5 à 7 précédentes, dans lequel l'amplitude de courant du courant de soudage circulant pendant la phase de soudage à courant faible du cycle de soudage est réglée dans une plage comprise entre 0 et 10 ampères.

9. Procédé selon l'une des revendications précédentes, dans lequel les impulsions d'amorçage à haute fréquence (ZI) sont appliquées dans un ou plusieurs paquets d'impulsions avec une fréquence prédéterminée sur une durée d'amorçage, dans lequel un paquet d'impulsions comprend plusieurs impulsions d'amorçage.

10. Procédé selon l'une des revendications précédentes, dans lequel pendant la phase de soudage à courant faible (NSP) du cycle de soudage (SZ) avec un réglage correspondant du cycle de soudage (SZ) concerné, des impulsions de courant (SI) sont de plus appliquées à l'amplitude de courant élevée (I_{HSP}).

11. Dispositif de soudage (1) pour souder des pièces (W), comportant :
une électrode de soudage non consommable (2) ;
un chalumeau de soudage (3) sur lequel se trouve l'électrode de soudage non consommable (2) ;
une source de courant de soudage (5) à laquelle le chalumeau de soudage (3) est relié par l'intermédiaire d'un ensemble de tuyaux (4), dans lequel le chalumeau de soudage (3) peut être alimenté en gaz protecteur par l'intermédiaire de l'ensemble de tuyaux (4) et dans lequel des lignes destinées à alimenter le chalumeau de soudage (3) en courant électrique provenant de la source de courant de soudage (5) se situent dans l'ensemble de tuyaux (4) ;
une mémoire de données dans laquelle se situent plusieurs travaux de soudage sélectionnables pour le réglage de leurs paramètres de soudage, dans lequel chaque travail de soudage comprend plusieurs cycles de soudage (SZ) d'un processus de soudage pour souder des pièces (W),
dans lequel chaque cycle de soudage (SZ) du processus de soudage comprend une phase de soudage à courant élevé (HSP) au cours de laquelle un courant de soudage (I) ayant une amplitude de courant élevée (I_{HSP}) circule, et une phase de soudage à courant faible (NSP) au cours de laquelle un courant de soudage (I) ayant une amplitude de courant faible (I_{NSP}) circule, dans lequel pendant la phase de soudage à courant élevé (HSP) du cycle de soudage (SZ) avec un réglage correspondant du cycle de soudage (SZ) concerné, des impulsions de courant (SI) sont appliquées à l'amplitude de courant élevée (I_{HSP}), et dans lequel au début de la phase de soudage à intensité élevée (HSP) avec un réglage correspondant du cycle de soudage concerné (SZ), des impulsions d'amorçage à haute fréquence (ZI) à polarité inversée sont appliquées pour l'amorçage sans contact de l'arc de soudage (SLB) ; et
une interface (6) par l'intermédiaire de laquelle un travail de soudage peut être sélectionné dans la mémoire de données et des paramètres des cycles de soudage du travail de soudage peuvent être réglés,
dans lequel le dispositif de soudage (1) est conçu pour amorcer, pour le soudage des pièces (W), un arc de soudage (SLB) entre l'électrode de soudage non consommable (2) du dispositif de soudage (1) et les pièces (W) et pour générer un bain fondu, ainsi que pour exécuter un processus de soudage avec plusieurs cycles de soudage (SZ) en fonction des paramètres des cycles de soudage du travail de soudage réglés via l'interface.
